**Europäisches Patentamt**

**European Patent Office**

**Office européen des brevets**

(19)

(11) Veröffentlichungsnummer: **0 237 530 B1**

(12)

# EUROPÄISCHE PATENTSCHRIFT

(45) Veröffentlichungstag der Patentschrift:
**17.04.91 Patentblatt 91/16**

(51) Int. Cl.⁵: **B01D 39/20, B01D 39/14, C04B 38/00**

(21) Anmeldenummer: **86903230.0**

(22) Anmeldetag: **30.05.86**

(86) Internationale Anmeldenummer:
**PCT/DE86/00227**

(87) Internationale Veröffentlichungsnummer:
**WO 87/01610 26.03.87 Gazette 87/07**

(54) **FILTERKÖRPER.**

Die Akte enthält technische Angaben, die nach dem Eingang der Anmeldung eingereicht wurden und die nicht in dieser Patentschrift enthalten sind.

(30) Priorität: **24.09.85 DE 3533924**

(43) Veröffentlichungstag der Anmeldung:
**23.09.87 Patentblatt 87/39**

(45) Bekanntmachung des Hinweises auf die Patenterteilung:
**17.04.91 Patentblatt 91/16**

(84) Benannte Vertragsstaaten:
**AT BE CH DE FR GB IT LI LU NL SE**

(56) Entgegenhaltungen:
**EP-A- 0 097 114**
**DE-A- 2 019 732**

(56) Entgegenhaltungen:
**US-A- 3 246 767**
**US-A- 3 573 158**
**Aufbereitungs-Technik, vol. 25, No. 9, September 1984, Wiesbaden (DE) Dr. Ing. W. Rausch: "Oberflächenfiltration mit Sinterlamellenfiltern, Bau- u. Verfahrensoptimierung", pages 502-511**

(73) Patentinhaber: **Schumacher GmbH & Co. KG**
**Zur Flügelau 70**
**W-7180 Crailsheim (DE)**

(72) Erfinder: **REINHARDT, Alexander-Maria**
**Schillerstrasse 10**
**W-7181 Stimpfach (DE)**
Erfinder: **REINHARDT, Erich, Karl**
**Hindenburgstrasse 88**
**W-7120 Bietigheim-Bissingen (DE)**

(74) Vertreter: **Hoeger, Stellrecht & Partner**
**Uhlandstrasse 14 c**
**W-7000 Stuttgart 1 (DE)**

## Beschreibung

Die Erfindung betrifft einen Filterkörper mit einem selbsttragenden, offenporigen Verbundkörper, der einen grobporösen, aus fremd- oder eigengebundenem Grobkorn bestehenden Trägerkörper und ein an einer Außenfläche mit dem Trägerkörper verbundenes, feinporöses, fremd- oder eigengebundenes Feinkorn enthaltendes Diaphragma umfaßt.

Es sind selbsttragende, hohlzylindrische mineralische Verbundmembranen für die Feinstfiltration bekannt, die aus einem starren, zweischichtigen, porösen Stützkörper und einer damit keramisch verbundenen, ultrafiltrierenden keramischen Membran bestehen (FR-A-2 550 953). Der poröse Stützkörper ist dabei aus Teilchen mit einer Größe zwischen 4 und 20 µm aufgebaut, die Teilchen der ultrafiltrierenden keramischen Membran haben Größen von etwa 0,05 bis 2 µm. Damit das Feinkorn auf den grobporösen Stützkörper aufgebracht werden kann, ist es dabei notwendig, den Stützkörper selbst zweilagig auszubilden, also auf den eigentlichen grobporösen Stützkörper noch eine Zwischenlage aufzubringen, in der Teilchen verwendet werden, deren Größe zwischen der des grobporösen Stützkörpers einerseits und der der ultrafiltrierenden Membran andererseits liegen. Dabei ergibt sich ein sehr aufwendiges Herstellungsverfahren, bei dem zusätzlich die Gefahr besteht, daß sich die ultrafiltrierende Membran vom Stützkörper ablöst, wenn dar Filterkörper insgesamt hohen Beanspruchungen ausgesetzt ist, beispielsweise wechselnden Erwärmungen auf sehr hohe Temperaturen oder chemischen Belastungen.

Als nachteilig hat sich auch herausgestellt, daß eine Reinigung der vollständig starren ultrafiltrierenden Membran schwierig ist. In die Membran eingedrungene Verunreinigungen können aus dieser praktisch nicht mehr entfernt werden.

Ähnliche Schwierigkeiten ergeben sich bei bekannten Sinterlamellenfiltern aus Kunststoff oder Metall, die aus einem grobporigen, tragenden, formstabilen Sinterkörper mit einer feinporigen aufgesinterten Membran bestehen (Dr. Ing. W. Rausch "Oberflächenfiltration mit Sinterlamellenfiltern – Bau- und Verfahrensoptimierung" in AUFBEREITUNGS-TECHNIK Nr. 9/1984, Seite 502 ff).

Es gibt weiterhin keramische Tiefenfilter mit kugeliger Struktur, die auch zweischichtig aufgebaut sein können. Eine Grobschicht bringt die mechanische Festigkeit, während eine 3 bis 5 mm starke Feinschicht die Filtrierschärfe gewährleistet (Firmenprospekt Krebsöge "Keramische Filter mit kugeliger Struktur", Erscheinungsdatum unbekannt). Auch hier ist es bei Temperaturwechselbeanspruchungen, wie sie beispielweise bei der Filterung von Kraftwerksabgasen auftreten, nicht möglich, eine Ablösung der beiden Schichten mit Sicherheit zu verhindern. Außerdem ergeben sich auch hier Schwierigkeiten bei der Reinigung der feinporösen Filterschicht.

Es sind keramische Filterkörper bekannt, die aus einer grobporösen Matrix mit eingebetteten Faserflocken aus Mineralfasern bestehen (DE-C-27 02 210). Bei diesen ist aber im Prinzip das gesamte Volumen des Filterkörpers homogen aufgebaut, d.h. die Faserflocken sind in einen Keramikstützkörper eingebettet, der über die gesamte Dicke des Filterkörpers etwa gleich große Porosität besitzt. Obwohl mit Filterkörpern dieser Art verbesserte Reinigungswirkungen erzielt werden können, ergibt sich ein relativ hoher Strömungswiderstand, da das Filtermaterial über die gesamte Dicke des Filterkörpers relativ geringe Porenweiten aufweisen muß, um eine Filtrierung zu erreichen.

Schließlich sind auch Filterkörper bekannt, in denen mit warmhärtendem Harz gebundene Glasfasern Verwendung finden (Firmenprospekt Commercial Filters Division Kennecott Corporation "Commercial Filters" Formular C-1078, 1980, 1981, 1982). Derartige Filter sind jedoch nicht für hohe Beanspruchungen geeignet, beispielsweise sehr hohe Temperaturen, hohe Temperaturwechselbeanspruchungen und bestimmte chemische Beanspruchungen. Außerdem ergibt sich bei Filtern dieser Art ebenfalls ein hoher Druckabfall, da die Filter über ihren gesamten Querschnitt in gleicher Weise feinporös ausgebildet sein müssen.

In den Druckschriften US-A-3 573 158 und US-A-3 246 767 sind Filterkörper beschrieben, die mehrschichtig aufgebaut sind. Bei diesen Filtern wird auf eine poröse Basisschicht mittels einer Zwischen- oder Verankerungsschicht eine eigentliche Filterschicht aufgebracht. Die Filterschicht ist eine reine Faserschicht, in der die Fasern eine bestimmte Orientierung haben sollen. Darüber hinaus sind Filter beschrieben, bei denen auch die außenliegende Filterschicht selbst aus drei verschiedenen Lagen besteht, die in nacheinanderfolgenden Schritten aufgebracht werden. Bei derartigen Filtern ist eine Rückreinigung fast unmöglich, da in tieferliegenden Filterschichten gefangene Schmutzpartikel nicht mehr durch die anderen Filterschichten hindurch an die Oberfläche zurückgebracht werden können. Derartige Filter haben eher Filtereigenschaften eines Tiefbettfilters, also eines Filters, welches im Inneren seiens Volumens Partikel festhält, und zwar in unterschiedlicher Tiefe der Filterschicht Partikel unterschiedlicher Größe.

Es ist Aufgabe der Erfindung, einen Filterkörper der eingangs beschriebenen Art derart weiterzubilden, daß einerseits die auf den Trägerkörper aufgebrachte Schicht auch bei großem Unterschied der Korngrößen im Trägerkörper und im Diaphragma mit dem Stützkörper unmittelbar und dauerhaft verbunden werden kann, wobei andererseits die Abreinigungswirkung beim Rückspülen des Filterkörpers gegenüber bekannten Filterkörpern verbessert wird.

Diese Aufgabe wird bei einem Filterkörper der eingangs beschriebenen Art erfindungsgemäß dadurch gelöst, daß das Diaphragma neben dem Feinkorn und einem Bindemittel Fasern enthält, deren absoluter Durchmesser zwischen 0,3 und 30 µm liegt, deren Länge mindestens zehnmal so groß ist wie ihr Durchmesser und die mindestens 10 µm lang sind, daß der volumenprozentuale Anteil des Feinkorns, der Fasern und des Bindemittels sich verhält wie (60 bis 40) : (40 bis 20) : (30 bis 10), daß das Verhältnis der.

Dicke des Trägerkörpers zu der Dicke des Diaphragmas zwischen 5 : 1 und 75 : 1 liegt, daß die absolute Dicke des Diaphragmas zwischen 0,2 und 2 Millimetern liegt und daß das Verhältnis der spezifischen Permeabilitäten des Trägerkörpers und des Diaphragmas für Fluide im laminaren Strömungsbereich zwischen 2 : 1 und 100 : 1 liegt.

Es hat sich überraschenderweise herausgestellt, daß die Verwendung eines Diaphragmas, das neben dem Feinkorn und dem Bindemittel zusätzlich den angegebenen Faseranteil enthält, die vorstehende Aufgabe vollständig löst. Der Faserzusatz bildet in der Diaphragmaschicht ein Stützgerüst aus, welches durch das Bindemittel und Feinkorn zu einem stabilen Gerüst vernetzt ist. Dabei verhindern die Fasern einerseits, daß das Feinkorn in die groben Poren des Trägerkörpers eindringt, andererseits verankern die freien Faserenden des Diaphragmas dieses über die gesamte Anlagefläche am Trägerkörper. Die Faserenden dringen in die groben Poren des Trägerkörpers ein und werden dort mit dem Grobkorn des Trägerkörpers verbunden und verzahnt, so daß auch bei sehr hohen Temperaturwechselbeanspruchungen die vollständig flächige Verbindung des Diaphragmas mit dem Trägerkörper erhalten bleibt. Ein weiterer vorteilhafter Effekt dieses Faseranteils zeigt sich in einer ganz erheblich verbesserten Abreinigungswirkung beim Rückspülen. Es wird angenommen, daß diese verbesserte Abreinigungswirkung darauf beruht, daß die Fasern zwischen Knotenstellen, an denen sie an andere Fasern oder Feinkorn gebunden sind, flexibel bleiben, so daß sich die Fasern über einen Bereich, der sich bis zu 50% der maximalen Faserlänge erstrecken kann, elastisch verformen können Dieser Effekt wird im folgenden als Mikroelastizität bezeichnet, da diese elastische Verformbarkeit auf sehr kleine Bereiche zwischen den Knotenstellen der Fasern beschränkt ist. Insgesamt ergibt sich durch die Bindung der Fasen und des Feinkorns ein starres, nicht elastisches Gerüst, die Elastizität beschränkt sich auf die beschriebenen elastischen Faserbereiche. Die elastische Verformung der Fasern zwischen den Festlegungsstellen führt dazu, daß Schmutzteilchen, die in das Diaphragma eingedrungen sind, relativ leicht wieder abgegeben werden können, wenn der Filterkörper insgesamt rückgespült wird. Durch die Bewegung der Fasern kann sich ihr Abstand vergrößern, so daß einmal festgehaltene Schmutzteilchen wieder zur außenfläche zurücktransportiert werden können. Auch die Eigenbewegung der Fasern unterstützt dabei die Entfernung von eingedrungenen Schmutzteilchen.

Es hat sich weiterhin überraschenderweise herausgestellt, daß sich durch Verwendung des erfindungsgemäßen Diaphragmas eine außerordentlich hohe Trennschärfe ergibt und daß der gesamte Druckabfall des Filterkörpers bei gleicher Trennschärfe wesentlich geringer ist als bei bekannten Filterkörpern, die homogen aufgebaut sind, beispielsweise gegenüber einer Filter gemäß DE-C-27 02 210.

Insgesamt ergeben sich also durch einen Faserzusatz zu Feinkorn und Bindemittel im Diaphragma drei wesentliche, vorteilhafte Funktionen, nämlich einmal eine netzartige Überbrückung der Porenmündungen des Trägerkörpers, so daß auf diesem Trägerkörper sofort eine viskose, diaphragmabildende Suspension ohne Verstopfung der inneren Poren aufgetragen werden kann, zum zweiten eine Fixierung und Verankerung des Diaphragmas am Trägerkörper durch eine punktuelle Bindung an das oberflächennahe Grobkorn des Trägerkörpers und schließlich die Verleihung einer Mikroelastizität, die einerseits das Abreinigungsverhalten verbessert und die andererseits eine wesentliche Voraussetzung dafür schafft, daß Diaphragma und Trägerkörper bei den unterschiedlichen auftretenden Beanspruchungen rissefrei und dauerhaft miteinander verbunden bleiben.

Es ist dabei besonders vorteilhaft, wenn das Bindemittel des Trägerkörpers und das Bindemittel des Diaphragmas gleich ist.

Vorzugsweise liegt der Durchmesser der Fasern zwischen 0,5 und 3 µm, die Faserlänge liegt vorzugsweise zwischen 50 und 500 µm.

Bei einem bevorzugten Ausführungsbeispiel ist vorgesehen, daß im Trägerkörper das volumenprozentuale Verhältnis des Grobkorns zum Bindemittel (80 bis 90) : (20 bis 10) beträgt, vorzugsweise 85 : 15.

Es ist günstig, wenn das Verhältnis der Dicke des Trägerkörpers mit der Dicke des Diaphragmas bei 10 : 1 liegt, und wenn die absolute Dicke des Diaphragmas zwischen 0,5 und 1 Millimeter liegt.

Bei einer bevorzugten Ausführungsform kann das Verhältnis der spezifischen Permeabilitäten des Trägerkörpers und des Diaphragmas für Fluide im laminaren Strömungsbereich etwa bei 10 : 1 liegen.

Bei einem besonders bevorzugten Ausführungsbeispiel ist vorgesehen, daß Grobkorn, Feinkorn, Bindemittel und Fasern bis auf Abweichungen unter 20% in mehreren oder allen der folgenden Eigenschaften übereinstimmen : Thermischer Ausdehnungskoeffizient, Wärmeleitfähigkeit, Temperaturwechselbeständigkeit, Quellverhalten, thermische und

chemische Langzeitbeständigkeit.

Dadurch wird sichergestellt, daß sich Trägerkörper und Diaphragma bei den unterschiedlich auftretenden Verhältnissen einheitlich verhalten, so daß Beschädigungen und Ablösungen vermieden werden. Beispielsweise ist bei Hochtempereturanwendung, z.B. bei der Heißgasfiltration, notwendig, daß die chemische und thermische Langzeitbeständigkeit, der thermische Ausdehnungskoeffizient und die Temperaturwechselbeständigkeit innerhalb des angegebenen Streubereichs übereinstimmen.

Bei der Begasung von Flüssigkeiten, z.B. bei Wasser oder Getränken, müssen chemische und thermische Langzeitbeständigkeit im Streubereich übereinstimmen.

Bei der Verwendung eines Fluids, z.B. in Gegenwart von organischen Flüssigkeiten, elektrolythaltigen wässrigen Lösungen oder Dämpfen, ist das Quellverhalten innerhalb des

Streubereichs von Bedeutung.

Die einzelnen Bestandteile des Filterkörpers können eigengebunden oder fremdgebunden sein. Eigenbindung erhält man beispielsweise durch Sinterung, Oberflächenverschmelzung, durch mikrokristalline Verwachsung oder durch chemische Bindung. Sinterung erfolgt dabei etwa ab zwei Drittel der Schmelztemperatur, die Oberflächenverschmelzung bei höheren Temperaturen, die mikrokristalline Verwachsung bei niedrigeren Temperaturen durch Diffusion.

Fremdbindung erhält man z.B. mit dem Material der Teilchen und Fasern durch artfremde keramische oder klebstoffähnliche Bindung durch Kunststoff.

Vorteilhafterweise bestehen Grob- und/oder Feinkorn aus einer der folgenden Substanzen: Quarz, Aluminosilikat, Glas, Aluminiumoxid, Siliciumcarbid, Kohlenstoff als Graphit oder Aktivkohle, Duroplaste, Elastomere, Metalle, Metallegierungen.

Grob- und/oder Feinkorn können dabei unterschiedliche Ausgestaltung haben, beispielsweise können sie vorliegen als unregelmäßig geformte Feststoffstücke, wie gebrochene, Körner, als zylindrische oder hohlzylindrische Abschnitte, als regelmäßig geformte Rundkörper, wie Vollkugeln oder Hohlkugeln.

Vorzugsweise bestehen die Fasern aus einer der folgenden Substanzen : Quarz, Aluminosilikat, Glas, Aluminiumoxid.

Siliciumcarbid, Kohlenstoff als Graphit oder Aktivkohle, Duroplaste, Elastomere, Metalle, Metalllegierungen.

Als Bindemittel kommen folgende Substanzen in Betracht : Kristalline und glasartige keramische Mehrstoffverbindungen wie Silikate, Phosphate, Karbide oder Nitride, mikrokristalliner oder amorpher Kohlenstoff als Koks, Graphit oder Aktrivkohle, Duroplaste, Elastomere.

Zur Oberflächenvergrößerung kann vorgesehen sein, daß die mit dem Diaphragma versehene Außenfläche des Trägerkörpers Vorsprünge und Vertiefungen aufweist, die vorzugsweise als parallele Axialnuten ausgebildet sind.

Die nachfolgende Beschreibung bevorzugter Ausführungsformen der Erfindung dient im Zusammenhang mit der Zeichnung der näheren Erläuterung. Es zeigen :

Fig. 1 eine Teilseitenansicht eines hohlzylindrischen Filterkörpers mit durch Axialnuten vergrößerter Oberfläche ;

Fig. 2 eine Schnittansicht längs Linie 2-2 in Fig. 1 ;

Fig. 3 eine vergrößerte Detailansicht des Bereiches A in Fig. 2 und

Fig. 4 eine vergrößerte Detailansicht des Bereiches B in Fig. 3.

Der in der Zeichnung dargestellte Filterkörper hat die Form eines hohlen Kreiszylinders 1, wobei die Oberfläche der Außenseite durch achsparallele Nuten 2 vergrößert ist.

Der Kreiszylinder umfaßt einen inneren Trägerkörper 3, auf den an der Außenfläche ein dünnes Diaphragma 4 aufgebracht ist.

Der Trägerkörper 3 besteht aus einem relativ groben Korn, mit einer Korngröße von beispielsweise 100 bis 300 µm. Dieses Korn ist mittels eines eigen- oder fremdbindenden Bindemittels 5 aneinandergebunden, so daß eine grobporöse Struktur mit Poren 6 entsteht.

Der Trägerkörper wird in an sich bekannter Weise aus einer Mischung aus Bindemittel und Grobkorn durch entsprechende Aushärtung hergestellt, so daß man einen vollständig homogenen Trägerkörper 3 erhält. Die Foren zwischen den durch Bindemittel 5 zusammengehaltenen Grobkonteilchen 7 haben Durchmesser in der Größenordnung der Grobkornteilchen 7, so daß sich für den Trägerkörper insgesamt eine hohe spezifische Permeabilität für Fluide im laminaren Strömungsbereich ergibt.

Auf den vorgefertigten Trägerkörper ist das dühne Diaphragma 4 aufgebracht. Die Diaphragmasubstanz setzt sich zusammen aus Feinkorn 8, aus einem Bindemittel und aus Fasern 9. Die Größen des Feinkorns 8 liegen beispielsweise in der Größenordnung von 10 bis 50 µm, die Länge der Fasern ist gegenüber dem Faserdurchmesser mindestens zehnmal so groß, vorzugsweise wesentlich größer, beispielsweise in der Größenordnung eines Faktors von 500 bis 1000. Der Durchmesser der Fasern bewegt sich im Bereich zwischen 0,3 und 5 µm und beträgt beispielsweise 3 µm.

Die Diaphragmaschicht 4 wird sehr dünn und vollflächig auf die Außenseite des Kreiszylinders 1 aufgetragen, das Dickenverhältnis zwischen Trägerkörper und Diaphragma liegt in der Größenordnung von 5 :

1 bis 75 : 1, vorzugsweise bei 10 : 1. Die Absolutdicken bewegen sich dabei zwischen 0,2 und 2 Millimetern.

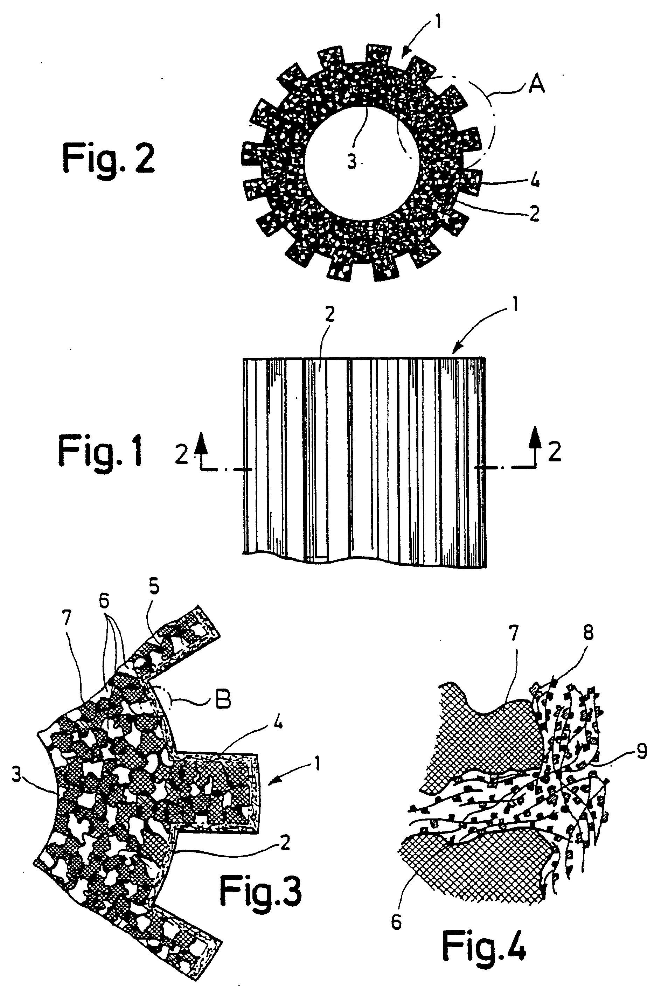

Nach dem Auftragen der dünnen Diaphragmaschicht wird diese auf dem Trägerkörper 3 durch Aushärten des Bindemittels verfestigt, wobei unter dem Begriff "Aushärten" je nach verwendetem Bindemittel die oben erwähnten, unterschiedlichen Bindungsarten zu verstehen sind. Es entsteht dabei das feinporige Diaphragma, bei dem das Feinkorn 8 durch das Bindemittel einerseits an die Fäsern 9 und andererseits an die Grobkornteilchen 7 des Trägerkörpers 3 gebunden ist (Figur 4). Dadurch werden die Fasern 9 untereinander verbunden, wobei die verbindenden Feinkornteilchen 8 Knotenstellen oder Brücken ausbilden. Andererseits werden auch die Fasern 9 an die Grobkornteilchen 7 angebunden. Dadurch ergibt sich eine innige Verbindung zwischen Diaphragma 4 und Trägerkörper 3, da diese Verankerung nicht nur an der äußeren Oberfläche erfolgt, sondern auch an den Wänden der Poren 6, wie dies in Figur 4 dargestellt ist.

Die Fasern überbrücken dabei gleichzeitig die Poren 6 und verhindern, daß das Feinkorn in das Innere der Poren eindringt und diese verstopft.

Zwischen benachbarten, an den Fasern 9 gebundenen Feinkornteilchen 8 ergibt sich ein freier Faserbereich, in dem die Fasern elastisch verformbar und flexibel sind, so daß die Fasern in diesem Bereich ihren gegenseitigen Abstand voneinander ändern können. Dieser frei verformbare Bereich kann bis zu 50% der Gesamtfaserlänge betragen, so daß in diesen Größenordnungen Mikroelastizität zu beobachten ist, während die gesamte Diaphragmaschicht 4 durch die Bindung der Feinkornteilchen 8 insgesamt ein starres Gerüst bildet.

Im folgenden werden einige bevorzugte Ausführungsbeispiele näher erläutert :

Ausführungsbeispiel 1 :

Zur Herstellung eines Trägerkörpers 3 werden 85 Volumenprozent Quarzsand mit einem bei 50% der Quarzsandteilchen unter 120 µm liegenden Durchmesser mit 15 Volumenprozent viskosem, vorkondensiertem, warmhärtendem Phenolformaldehydharz bei Temperarturen zwischen 150 und 180°C zu einem starren, homogenen, offenporigen Gefüge fremdbindend verbunden.

Eine Mischung aus 50 Volumenprozent Quarzsant mit einem mittleren Durchmesser von 15 µm, 30 Volumenprozent hydrolysebeständigen Aluminiumsilikatfasern mit einem mittleren Faserdurchmesser von 3 µm, einer mittleren Faserlänge von 2000 µm und 20 Volumenprozent des gleichen warmhärtenden Phenolformaldehydharzes wird auf die Außenfläche des ausgehärteten Trägerkörpers durch Streichen, Spritzen oder Tauchen in an sich bekannter Weise gleichmäßig aufgebracht und thermisch härtend miteinander verbunden, und zwar so, daß sich die Dicke des Trägerkörpers und des Diaphragmas wie 10 : 1 verhält.

Im Bereich laminarer Strömung verhalten sich die spezifischen Permeabilitäten des Trägerkörpers und des Diaphragmas für ein und dasselbe Fluid wie 50 : 1.

Das entstehende Diaphragma ist in Bereichen mit einer räumlichen Ausdehnung von bis zu 50% der maximalen Faserlänge mikroelastisch. Der nach vorstehenden Kriterien hergestellte offenporige Körper eignet sich besonders für die Filtration von Gasen und Flüssigkeiten im pH-Bereich von 0 bis 9 bei Temperaturen bis 100°C, für die Begasung von Flüssigkeiten im gleichen pH-Bereich, bevorzugt von Abwasser, im Rahmen einer feinblasigen Belüftung sowie zur Fluidisierung von feinstteiligen Schüttgütern im Temperaturbereich bis 120°C.

In allen drei Anwendungsbeispielen zeichnet sich die beanspruchte Materialkombination durch eine wesentlich geringere Verstopfungsanfälligkeit und einen beträchtlich geringeren Druckverlust als ein einschichtiges, homogenes, vollkommen starres Gefüge gleicher Durchlässigkeit aus.

Ausführungsbeispiel 2 :

Zur Herstellung eines hohlzylindrischen Trägerkörpers wird eine aus 88 Volumenprozent $\alpha$-$Al_2O_3$ mit einem Durchmesser, der bei 50% der Teilchen unter 350 µm liegt, und aus 12 Volumenprozent eines keramischen Birders bestehende Mischung in an sich bekannter Weise über eine grünstandfeste Zwischenform bei Temperaturen zwischen 1200 und 1400°C zu einem gleichmäßig offenporigen Formkörper fremdbindend gebrannt.

Auf diesen Trägerkörper wirnd eine viskose, thixotrope Mischung aus 57 Volumenprozent $\alpha$-$Al_2O_3$ mit einem Durchmesser, der bei 50% der Teilchen unter 13 µm liegt, aus 25 Volumenprozent Fasern aus $Al_2O_3$ mit einem mittleren Faserdurchmesser von ca. 3 µm und einer mittleren Faserlänge von maximal 3000 µm und aus 18 Volumenprozent des gleichen wie zur Herstellung des Trägerkörpers verwendeten Binders auf die äußere Zylindermantelfläche des gebrannten Trägerkörpers in an sich bekannter Weise z.B. durch Streichen oder Tauchen, in gleichmäßiger Schichtdicke unter Ausnutzung der Kapillarität des Trägerkörpers aufgebracht, getrocknet und anschließend bei Temperaturen zwischen 1200 und 1400°C mit dem Trägerkörper keramisch fremdbindend verbunden.

Das so aufgebrachte mikroelastische Diaphragma hat eine Schichtdicke von 0,2 und 1,0 mm. Bei einer bevorzugten Wandstärke des Trägerkörpers von 10 bis 15 mm entspricht dies einem Dickenverhältnis von Trägerkörper zu Diaphragma von 10 :

1 bis 75 : 1.

Das in der beschriebenen Weise hergestellte zweischichtige poröse Medium ist für den Einsatz bei Dauerbetriebstemperaturen zwischen 600 und 1200°C ausgezeichnet zu verwenden. Der starre, selbsttragende, rein keramische, grobporöse Trägerkörner verleiht dem gesamten Filterkörper eine hohe mechanische, thermische und chemische Beständigkeit sowie eine hohe Temperaturwechselbeständigkeit.

Der durch den grobporösen Trägerkörper verursachte Filterwiderstand, z.B. gegenüber Luft bei Raumtemperatur, ist äußerst gering, z.B. 0,3 kPa bei einer Wandstärke von 15 mm und einer Anströmgeschwindigkeit von 5,5 cm/sec. Der durch das eigentlich feinstfiltrierende Diaphragma von 0,3 mm Dicke verursachte Filterwiderstand ist etwa gleich groß wie der Filterwiderstand des Trägerkörpers, so daß ein Gesamtfilterwiderstand von ca. 0,6 kPa resultiert.

Vergleichbare, aus einem strukturierten Gefüge von keramisch gebundenen keramischen Körnern und Fasern bestehende Filtermedien, wie sie in der DE-C-27 02 210 beschrieben sind, besitzen einen etwa dreifachen Filterwiderstand.

Das durch einen außergewöhnlich hohen Abscheidegrad von 99,9% für feinste Staubteilchen, z.B. Flugasche mit einem Durchmesser, der bei 50% der Teilchen unter 1,2 μm liegt, ausgezeichnete Diaphragma stellt ein quasi-Absolutfiltermedium dar, das in Verbindung mit dem sehr grobporigen Gefüge des Trägerkörpers eine Ablagerung von Feinststaub im Inneren des Gesamtfilterkörpers und damit eine bleibende Verstopfung verhindert. Die auch bei hohen Temperaturen erhalten bleibende Eigenelastizität (Mikroelastizität) des Diaphragmas gewährleistet eine wesentlich wirkungsvollere Abreinigung des verstopfenden Staubbelages als bei einem starren Filtermedium.

Dieser Filterkörper ermöglicht somit in hervorragender Weise die wirtschaftliche Feinstfiltration von heißen, korrodierenden und erodierenden Gasen in Verbindung mit automatisierten, nach dem Rückstoßprinzip periodisch abreinigbaren filternden Staubabscheidern bei Temperaturen bis 1200°C.

Ausführungsbeispiel 3 :

Zur Herstellung eines hohlzylindrischen Trägerkörpers wird ein aus 80 Volumenprozent technischem Koks mit einer Teilchengröße, die bei 50% der Teilchen unter 250 μm liegt, und aus 20 Volumenprozent Steinkohlenteer als Binder bestehende Mischung in an sich bekannter Weise über eine durch Abdestillieren bei erhöhter Temperatur erhaltene, grünstandfeste Zwischenform bei Temperaturen zwischen 900 und 1100°C zu einem gleichmäßig offenporigen Formkörper in reduzierender Atmosphäre eigenbindend durch mikrokristalline Verwachsung gebrannt.

Auf diesem starren Formkörper wird eine viskose, thixotrope Mischung aus 40 Volumenprozent feinkörnigen Kokses mit einem Teilchendurchmesser, der bei 50% der Teilchen unter 35 μm liegt, aus 40 Volumenprozent Kohlenstoff-Faser mit einem mittleren Faserdurchmesser von 20 μm und einer mittleren Faserlänge von mindestens 500 μm und aus 20 Volumenprozent des gleichen wie zur Herstellung des Trägerkörpers verwendeten Binders auf die äußere Zylindermantelfläche des gebrannten Trägerkörpers z.B. durch Streichen oder Tauchen in gleichmäßiger Dicke unter Ausnutzung der Kapillarität des Trägerkörpers aufgebracht, durch Abdestillierung der flüchtigen Binderbestandteile verfestigt und anschließend bei Temperaturen zwischen 900 und 1100°C mit dem Trägerkörper in reduzierender Atmosphäre unter Karbonisierung des verbliebenen Binderanteils eigenbindend verbunden.

Das so aufgebrachte mikroelastische, aus reinem Kohlenstoff bestehende Diaphragma weist eine Schichtdicke zwischen 0,4 und 1,5 mm auf, die bevorzugte Wandstärke des Trägerkörpers liegt dabei bei 25 mm.

Das beschriebene zweischichtige Filtermedium ist durch hervorragende filtertechnische Eigenschaften, insbesondere im Bereich von Dauerbetriebstemperaturen bis 350°C in fluorwasserstoffhaltiger Atmosphäre gekennzeichnet, wie sie beispielsweise bei der Konversion von Uranoxid zu Uranhexafluorid bei der filtrativen Abtrennung von nicht umgesetztem Uranoxid vorliegt.

Auch dieser Filterkörper zeichnet sich durch hervorragende Filtrierschärfe bei geringem Filterwiderstand, durch hohe chemische und mechanische Beständigkeit bei Temperaturen bis 350°C sowie durch die Mikroelastizität des Diaphragmas aus, durch welche eine hervorragende Regenerierbarkeit mittels Rückstoßabreinigung erreichbar ist.

**Ansprüche**

1. Filterkörper mit einem selbsttragenden, offenporigen Verbundkörper, der einen grobporösen, aus fremd- oder eigengebundenem Grobkorn bestehenden Trägerkörper (3) und ein an einer Außenfläche mit dem Trägerkörper verbundenes, feinporöses, fremd- oder eigengebundenes Feinkorn enthaltendes Diaphragma (4) umfaßt, **dadurch gekennzeichnet,** daß das Diaphragma (4) neben dem Feinkorn (8) und einem Bindemittel Fasern (9) enthält, deren absoluter Durchmesser zwischen 0,3 und 30 μm liegt, deren Länge mindestens zehnmal so groß ist wie ihr Durchmesser und die mindestens 10 μm lang sind, daß der volumenprozentuale Anteil des Feinkorns (8), der Fasern (9) und des Bindemittels sich verhält wie (60 bis 40) : (40 bis 20) : (30 bis 10), daß das Verhältnis der Dicke des Trägerkörpers (3) zu der Dicke des Diaphragmas (4) zwischen 5 : 1 und 75 : 1 liegt, daß die absolute Dicke des Diaphragmas (4) zwischen 0,2 und 2 Millimetern liegt und daß das Verhältnis der spezifischen Permeabilitäten des Trägerkörpers (3) und des Diaphragmas (4) für Fluide im laminaren Strömungsbereich zwischen 2 : 1 und 100 : 1 liegt.

2. Filterkörper nach Anspruch 1, dadurch gekennzeichnet, daß das Bindemittel (5) des Trägerkörpers (3) und das Bindemittel des Diaphragmas (4) gleich ist.

3. Filterkörper nach Anspruch 1 oder 2, dadurch gekennzeichnet, daß der Durchmesser der Fasern (9) zwischen 0,5 und 3 µm liegt.

4. Filterkörper nach einem der voranstehenden Ansprüche, dadurch gekennzeichnet, daß die Faserlänge zwischen 50 und 500 µm liegt.

5. Filterkörper nach einem der voranstehenden Ansprüche, dadurch gekennzeichnet, daß im Trägerkörper (3) das volumenprozentuale Verhältnis des Grobkorns (7) zum Bindemittel (5) (80 bis 90) : (20 bis 10) beträgt.

6. Filterkörper nach Anspruch 5, dadurch gekennzeichnet, daß im Trägerkörper (3) das volumenprozentuale Verhältnis des Grobkorns (7) zum Bindemittel (5) 85 : 15 beträgt.

7. Filterkörper nach einem der voranstehenden Ansprüche, dadurch gekennzeichnet, daß das Verhältnis der Dicke des Trägerkörpers (3) zu der Dicke des Diaphragmas (4) bei 10 : 1 liegt.

8. Filterkörper nach einem der voranstehenden Ansprüche, dadurch gekennzeichnet, daß die absolute Dicke des Diaphragmas (4) zwischen 0,5 und 1 Millimeter liegt.

9. Filterkörper nach einem der voranstehenden Ansprüche, dadurch gekennzeichnet, daß das Verhältnis der spezifischen Permeabilitäten des Trägerkörpers (3) und des Diaphragmas (4) für Fluide im laminaren Strömungsbereich etwa bei 10 : 1 liegt.

10. Filterkörper nach einem der voranstehenden Ansprüche, dadurch gekennzeichnet, daß Grobkorn (7), Feinkorn (8), Bindemittel (5) und Fasern (9) bis auf Abweichungen unter 20% in mehreren oder allen der folgenden Eigenschaften übereinstimmen : Thermischer Ausdehnungskoeffizient, Wärmeleitfähigkeit, Temperaturwechselbeständigkeit, Quellverhalten, thermische und chemische Langzeitbeständigkeit.

11. Filterkörper nach einem der voranstehenden Ansprüche, dadurch gekennzeichnet, daß Grob- und-/oder Feinkorn (7, 8) aus einer der folgenden Substanzen bestehen : Quarz, Aluminosilikat, Glas, Aluminiumoxid, Siliciumcarbid, Kohlenstoff als Graphit oder Aktivkohle, Duroplaste, Elastomere, Metalle, Metallegierungen.

12. Filterkörper nach einem der voranstehenden Ansprüche, dadurch gekennzeichnet, daß die Fasern (9) aus einer der folgenden Substanzen bestehen : Quarz, Aluminosilikat, Glas, Aluminiumoxid, Siliciumcarbid, Kohlenstoff als Graphit oder Aktivkohle, Duroplaste, Elastomere, Metalle und Metallegierungen.

13. Filterkörper nach einem der voranstehenden Ansprüche, dadurch gekennzeichnet, daß als Bindemittel folgende Substanzen verwendet sind : Kristalline und glasartige keramische Mehrstoffverbindungen wie Silikate, Phosphate, Karbide oder Nitride, mikrokristalliner oder amorpher Kohlenstoff als Koks, Graphit oder Aktivkohle, Duroplaste, Elastomere.

14. Filterkörper nach einem der voranstehenden Ansprüche, dadurch gekennzeichnet, daß die mit dem Diaphragma (4) versehene Außenfläche des Trägerkörpers (3) zur Oberflächenvergrößerung Vorsprünge und Vertiefungen aufweist.

15. Filterkörper nach Anspruch 14, dadurch gekennzeichnet, daß die Außenfläche axial-parallele Nuten (2) aufweist.

## Claims

1. A filter body with a self-supporting, open-pored compound body which comprises a coarsely porous carrier body (3) consisting of coarse grain bound intrinsically or extrinsically and a finely porous diaphragm (4) connected on an outer face to the carrier body and containing fine grain bound intrinsically or extrinsically, characterised in that, in addition to the fine grain (8) and a binding agent, the diaphragm (4) contains fibres (9) whose absolute diameter is between 0.3 and 30 µm, whose length is at least ten times as great as its diameter and which are at least 10 µm long, in that the percentage-by-volume part of the fine grain (8), the fibres (9) and the binding agent is (60 to 40) : (40 to 20) : (30 to 10), in that the ratio of the thickness of the carrier body (3) to the thickness of the diaphragm (4) is between 5 : 1 and 75 : 1, in that the absolute thickness of the diaphragm (4) is between 0.2 and 2 millimetres and in that the ratio of the specific permeabilities of the carrier body (3) and of the diaphragm (4) is between 2 : 1 and 100 : 1 for fluids in the laminar flow region.

2. A filter body according to claim 1, characterised in that the binding agent (5) of the carrier body (3) is the same as the binding agent of the diaphragm (4).

3. A filter body according to claim 1 or 2, characterised in that the diameter of the fibres (9) is between 0.5 and 3 µm.

4. A filter body according to any one of the preceding claims, characterised in that the length of the fibres is between 50 and 500 µm.

5. A filter body according to any one of the preceding claims, characterised in that, in the carrier body (3), the percentage-by-volume ratio of the coarse grain (7) to the binding agent (5) is (80 to 90): (20 to 10).

6. A filter body according to claim 5, characterised in that, in the carrier body (3), the percentage-by-volume ratio of the coarse grain (7) to the binding agent (5) is 85 : 15.

7. A filter body according to any one of the preceding claims, characterised in that the ratio of the thickness of the carrier body (3) to the thickness of the diaphragm (4) is approximately 10 : 1.

8. A filter body according to any one of the preceding claims, characterised in that the absolute thickness of the diaphragm (4) is between 0.5 and 1 millimetres.

9. A filter body according to any one of the preceding claims, characterised in that the ratio of the specific permeabilities of the carrier body (3) and of the diaphragm (4) is approximately 10 : 1 for fluids in the laminar flow region.

10. A filter body according to any one of the preceding claims, characterised in that coarse grain (7), fine grain (8), binding agent (5) and fibres (9) correspond, up to deviations of below 20%, in several or all of the following properties : coefficient of thermal expansion, heat conductivity, resistance to sudden changes of temperature, swelling behaviour, long-term thermal and chemical resistance.

11. A filter body according to any one of the preceding claims, characterised in that coarse and/or fine grain (7, 8) consist of one of the following substances: quartz, aluminium silicate, glass, aluminium oxide, silicon carbide, carbon in the form of graphite or active carbon, duroplastics, elastomers, metals, metal alloys.

12. A filter body according to any one of the preceding claims, characterised in that the fibres (9) consist of one of the following substances : quartz, aluminium silicate, glass, aluminium oxide, silicon carbide, carbon in the form of graphite or active carbon, duroplastics, elastomers, metals and metal alloys.

13. A filter body according to any one of the preceding claims, characterised in that the following substances are used as binding agent : crystalline and glass-like ceramic complex compounds such as silicates, phosphates, carbides or nitrides, microcrystalline or amorphous carbon in the form of coke, graphite or active carbon, duroplastics, elastomers.

14. A filter body according to any one of the preceding claims, characterised in that the outer face, provided with the diaphragm (4), of the carrier body (3) has projections and recesses in order to enlarge the surface.

15. A filter body according to claim 14, characterised in that the outer face has axially parallel grooves (2).

## Revendications

1. Corps de filtre constitué d'un corps composite autoportant, à pores ouverts, qui comprend un substrat (3) macroporeux formé de gros grains liés entre eux par un liant ou par autoagglomération, et d'un diaphragme (4) microporeux formé de grains fins liés entre eux par un liant ou par autoagglomération, diaphragme qui est relié à une surface externe du substrat, caractérisé en ce que le diaphragme (4) contient, outre les grains fins (8) et un liant, des fibres (9) dont le diamètre absolu est compris entre 0,3 et 30 μm, dont la longueur est au moins dix fois plus grande que leur diamètre et dont la longueur minimale est de 10 μm, que le rapport en pour cent de volume des fractions de grains fins (8), de fibres (9) et de liant est de (60 à 40) : (40 à 20) : (30 à 10), que le rapport de l'épaisseur du substrat (3) à l'épaisseur du diaphragme (4) est compris entre 5 : 1 et 75 : 1, que l'épaisseur absolue du diaphragme (4) est comprise entre 0,2 et 2 millimètres et que le rapport des perméabilités spécifiques du substrat (3) et du diaphragme (4) pour des fluides en écoulement laminaire est compris entre 2 : 1 et 100 : 1.

2. Corps de filtre selon la revendication 1, caractérisé en ce que le liant (5) du substrat (3) et le liant du diaphragme (4) sont les mêmes.

3. Corps de filtre selon la revendication 1 ou 2, caractérisé en ce que le diamètre des fibres (9) est compris entre 0,5 et 3 μm.

4. Corps de filtre selon une des revendications précédentes, caractérisé en ce que la longueur des fibres est comprise entre 50 et 500 μm.

5. Corps de filtre selon une des revendications précédentes, caractérisé en ce que le rapport en pour cent de volume des gros grains (7) au liant (5) dans le substrat (3) est de (80 à 90) : (20 à 10).

6. Corps de filtre selon la revendication 5, caractérisé en ce que le rapport en pour cent de volume des gros grains (7) au liant (5) dans le substrat (3) est de 85 : 15.

7. Corps de filtre selon une des revendications précédentes, caractérisé en ce que le rapport de l'épaisseur du substrat (3) à l'épaisseur du diaphragme (4) est d'environ 10 : 1.

8. Corps de filtre selon une des revendications précédentes, caractérisé en ce que l'épaisseur absolue du diaphragme (4) est comprise entre 0,5 et 1 mm.

9. Corps de filtre selon une des revendications précédentes, caractérisé en ce que le rapport des perméabilités spécifiques du substrat (3) et du diaphragme (4) pour des fluides en écoulement laminaire est d'environ 10 : 1.

10. Corps de filtre selon une des revendications précédentes, caractérisé en ce que les gros grains (7), les grains fins (8), le liant (5) et les fibres (9) concordent, avec des écarts restant inférieurs à 20%, pour ce qui concerne plusieurs ou toutes les caractéristiques suivantes : coefficient de dilatation thermique, conductibilité thermique, résistance aux chocs thermiques, gonflement et tenue à long terme aux sollicitations thermiques et chimiques.

11. Corps de filtre selon une des revendications précédentes, caractérisé en ce que les gros grains et/ou les grains fins (7, 8) sont formés d'une des substances suivantes : quartz, aliminosilicate, verre, oxyde d'aluminium, carbure de silicium, carbone sous forme de graphite ou de charbon actif, matières plastiques thermodurcissables, élastomères, métaux et alliages métalliques.

12. Corps de filtre selon une des revendications précédentes, caractérisé en ce que les fibres (9) sont formées d'une des substances suivantes : quartz, aluminosilicate, verre, oxyde d'aluminium, carbure de silicium, carbone sous forme de graphite ou de charbon actif, matières plastiques thermodurcissables, élastomères, métaux et alliages métalliques.

13. Corps de filtre selon une des revendications précédentes, caractérisé en ce que les liants sont constitués d'une ou plusieurs des substances suivantes : composés céramiques cristallins et vitreux à plusieurs constituants, tels que silicate, phosphates, carbures ou nitrures, carbone microcristallin ou amorphe, sous forme de coke, graphite ou charbon actif, matières plastiques thermodurcissables et élastomères.

14. Corps de filtre selon une des revendications précédentes, caractérisé en ce que la surface externe du substrat (3) pourvue du diaphragme (4) présente des saillies et des creux destinés à agrandir la surface.

15. Corps de filtre selon la revendication 14, caractérisé en ce que la surface externe présente des rainures (2) parallèles à l'axe.

Fig. 2

Fig. 1

Fig. 3

Fig. 4